# EUROPÄISCHE PATENTSCHRIFT

(11) **EP 2 004 456 B1**
(45) Veröffentlichungstag und Bekanntmachung des Hinweises auf die Patenterteilung: **11.05.2016**
(21) Anmeldenummer: 07711841.2
(22) Anmeldetag: 07.03.2007
(51) Int. Cl.: B60R 22/18, D05B 25/00

(54) **VERFAHREN UND VORRICHTUNG ZUM VERARBEITEN VON BIEGESCHLAFFEM MATERIAL**
METHOD AND DEVICE FOR PROCESSING HIGHLY FLEXURAL MATERIAL
PROCEDE ET DISPOSITIF POUR TRAITER UN MATERIAU FLEXIBLE

(30) Priorität: 07.03.2006 DE 102006010533; 26.10.2006 DE 102006050611
(43) Veröffentlichungstag der Anmeldung: 24.12.2008
(73) Patentinhaber: RSG Automation Technics GmbH & Co. KG, 74321 Bietigheim-Bissingen (DE)
(72) Erfinder: ECKER, Andreas, 72622 Nürtingen (DE)
(74) Vertreter: nospat Patent- und Rechtsanwälte GbR
(86) Internationale Anmeldenummer: PCT/EP2007/001978
(87) Internationale Veröffentlichungsnummer: WO 2007/101683

(56) Entgegenhaltungen:
- DE-A1- 3 635 727
- DE-U- 7 221 660
- US-A- 3 776 162
- US-A- 4 157 687
- US-A- 4 287 841
- US-A- 5 255 619

## Beschreibung

Die vorliegende Erfindung betrifft ein Verfahren und eine Vorrichtung zum Verarbeiten von biegeschlaffem textilem Gurtmaterial Material in Streifenform.

Im Rahmen der Beschreibung der vorliegenden Erfindung werden mit dem Begriff "biegeschlaff" Materialien bezeichnet, die im Wesentlichen nur auf Zug beansprucht und gefördert werden können, da in ihnen nahezu kein Biegemoment wirken kann. Unter dem Begriff "Streifenform" wird Material mit einer Geometrie verstanden, bei der eine Längenausdehnung deutlich größer als eine Breiten- und Höhenausdehnung ist, wie dies insbesondere auf textiles Gurtmaterial zutrifft. So sind textile Gurtmaterialien wesentliche Vertreter einer Materialgruppe mit den vorstehend genannten Eigenschaften. Neben Sicherheits- und/ oder Lastengurten aus Kunststofftextilien weisen auch Gurtmaterialien aus Leder, Kautschuk oder Kunststoff, wie beispielsweise Metall- und/oder Kunststofffolien oder PVC-Materialien mit und ohne eingelagerte Verstärkungsfasern, als streifenförmige Materialien eine biegeschlaffe Charakteristik auf.

Ein halbautomatisiertes Verfahren zur Verarbeitung eines streifenförmigen textilen Gurtmaterials ist z.B. aus der DE 3635727 A1 bekannt. Hierbei werden beide Endbereiche des biegeschlaffen Materials in gleicher Art und Weise bearbeitet, nämlich durch Nähvorgänge.

US 4 157 687 A offenbart ein Verfahren und eine Vorrichtung zum Bilden einer Schleife in einem Sicherheitsgurt und Zusammennähen der Ringriemen in einem zweistufigen Nähprozess. Zeitlich überlappend wird hier jedoch immer nur an unterschiedlichen Gurtabschnitten gearbeitet, und dann an gleicher Position relativ zu einem jeden Gurt.

Ferner offenbart US 5 255 619 A ein Verfahren und eine Vorrichtung zum Umnähen parallel laufender Seitenkanten z.B. bei Bettlaken. Die in gleicher Weise gefalteten und vernähten Längskanten entsprechen nicht den schmaleren Schnitt- bzw. Trennkanten, wie dies bei Gurtmaterial der Fall sein muss.

Ohne Beschränkung der Erfindung wird nachfolgend als Beispiel nur auf eine Fertigung von Sicherheitsgurten für Kraftfahrzeuge eingegangen. Nach bekannten Arbeitsverfahren werden Sicherheitsgurte in der Regel auf verketteten Arbeitsplätzen produziert, die als Einzelarbeitsplätze jeweils mit Eingabe- und Ausgabe-Zwischenpuffern versehen sind. Ausgehend von einem z.B. zwischen 3,80 m und ca. 5,40 m lang abgemessenen Gurtmaterial wird in einem bekannten Verfahren an einem Arbeitsplatz eine Stifttasche manuell gefaltet, genäht und manuell mit einem eingeschobenen Stift versehen, der in der Stifttasche durch Klemmung gehalten wird. In einigen Fällen wird an dieser Stelle ein Etikett aufgebracht. Das Gurtmaterial wird anschließend in eine aufrollende Gurttrommel bzw. Aufzieheinrichtung eingelegt und nachfolgend manuell soweit durchgezogen, bis die durch den Stift verdickte Stifttasche in einer Endlage in der Gurttrommel fixiert zu liegen kommt.

Nachfolgend wird der vormontierte Sicherheitsgurt in dem bekannten Verfahren einem sogenannten Pendeltest zur Funktionskontrolle der Gurttrommel unterzogen. Schließlich wird das Gurtmaterial mit einem Schließ- bzw. Steckblech und mit einer Umlenkeinrichtung bestückt sowie mit einem Halteniet versehen. In jedem Fall wird nun ein zweites freies Ende des Gurtmaterials durch einen Endbeschlag durchgeschlauft, gefaltet und vernäht. Vor dem Vernähen wird i.d.R. das Etikett eingebracht. Dieser Ösen-förmige Endanschlag bildet zusammen mit der Gurttrommel die starren Fixierungspunkte eines Sicherheitsgurtes im Bereich z.B. einer B-Säule eines Kraftfahrzeugs. Die Umlenkeinrichtung bildet ein Gleitlager, das den Sicherheitsgurt griffbereit zum Anlegen nach dem Besteigen eines Fahrzeugs an der B-Säule im Bereich einer Rückenlehne eines Sitzes hält. Auf eine Endkontrolle folgt die Verpackung des nun einsatzbereit vorgefertigten Sicherheitsgurtes.

Aufgabe der vorliegenden Erfindung ist es, ein Verfahren und eine entsprechende Vorrichtung zum Verarbeiten von biegeschlaffem Material in Streifenform unter Optimierung von Arbeitsvorgängen bei erhöhter Produktionszuverlässigkeit zu schaffen.

Diese Aufgabe wird durch die Merkmale der unabhängigen Ansprüche gelöst. Dementsprechend zeichnet sich eine erfindungsgemäße Vorrichtung zur Verarbeitung von biegeschlaffem textilem Gurtmaterial Material in Streifenform wobei die beiden Endbereiche des biegeschlaffen Materials im Wesentlichen simultan und in unterschiedlicher Art und Weise bearbeitet werden, wobei zu einer der Bearbeitungsarten mindestens ein Nähvorgang gehört, dadurch aus, dass in der ersten Bearbeitungseinrichtung der erste Endbereich unter Einschieben eines Stiftes gefaltet und vernäht wird und im Wesentlichen simultan zu den Verarbeitungsschritten in der ersten Bearbeitungseinrichtung in einer zweiten Bearbeitungsrichtung ein Ab- und/oder Einmessen des biegeschlaffen Materials in Streifenform auf definierte Länge mit nachfolgendem Heißtrennen und Nachbearbeiten der Schnittkanten vorgenommen wird. Damit bildet die Erkenntnis, dass ein biegeschlaffes Material in Streifenform zwei im Wesentlichen simultan bearbeitbare Endbereiche besitzt, die Basis eines erfindungsgemäßen Verfahrens und einer entsprechend ausgebildeten Vorrichtung. Hierdurch wird eine wesentliche Ersparnis an Arbeitszeit erzielt, wobei durch Verbindung und sogar überlappenden Einsatz vormals getrennter Arbeitsstationen auch die Produktionszuverlässigkeit aufgrund eines Wegfalls von halbautomatisierten Transport- und von i.d.R. von Hand durchgeführten Positionierschritten gesteigert wird. Da sich beide Endbereiche zudem während der Dauer einer jeweiligen Bearbeitung in zueinander fixierter Lage befinden, ist damit auch eine Optimierung von Arbeitsgängen mit Sicherung gegen Bedien- und Bestückungsfehler im Sinne eines Poka Yoke Systems gegeben, d.h. durch das gezielte Umgehen möglicher Fehler und Fehlerquellen in der Fertigung.

Weitere vorteilhafte Merkmale sind Gegenstand der jeweiligen Unteransprüche. In einer bevorzugten Ausführungsform der Erfindung wird demnach in der ersten Bearbeitungseinrichtung der erste Endbereich unter Einschieben eines Stiftes gefaltet und vernäht, wobei das Einführen vorzugsweise automatisch erfolgt. Damit laufen in der ersten Bearbeitungseinrichtung an dem ersten Endbereich die Arbeitsvorgänge Einführen, Bestücken, Falten und Nähen ab. Bevorzugter Weise wird im Wesentlichen simultan zu den Verarbeitungsschritten in der ersten Bearbeitungseinrichtung in einer zweiten Bearbeitungseinrichtung ein Abmessen des biegeschlaffen Materials in Streifenform auf eine definierte Länge mit nachfolgendem Heißtrennen und Nachbearbeiten der Schnittkanten vorgenommen, insbesondere in Form von Plätten nach einem Heißschneiden und/oder als Warmverformung der Schnittkanten.

Vorteilhafter Weise erfolgt ein Herausziehen des vorverarbeiteten biegeschlaffen Materials aus der ersten Bearbeitungseinrichtung im Zuge eines Einfädelns des zweiten Endbereichs in und ein Durchführen durch einen Aufrollmechanismus. Somit kann ein separater Auswurfmechanismus in der vorstehend hinsichtlich möglicher Fertigungsschritte beschriebenen ersten Bearbeitungseinrichtung eingespart werden. Zudem kann mit einem Weitertransport des Materialstreifens bereits begonnen werden, während eine Bearbeitung in der ersten Bearbeitungseinrichtung noch läuft.

In einer bevorzugten Ausführungsform der Erfindung wird an das Durchführen des zweiten Endbereichs durch den Aufrollmechanismus ein Einfädeln von Schloss-Elementen und Fixierungsmitteln bei nachfolgender Anordnung eines Sicherungsniets an vorbestimmter Stelle bzw. Gurtlänge durchgeführt, insbesondere unter Einsatz einer Pusher/Puller-Kombination. Damit können insbesondere vorpositionierte Elemente mit im Wesentlichen gleicher Art der Durchführung des Materialstreifens in einem Schritt bei Einsatz eines Pusher- / Puller-Paares verarbeitet werden. Das geschieht vorteilhafterweise unterbrechungsfrei und quasi auf dem Weg des zweiten Endbereiches hin zu einer weiteren Bearbeitungsstation.

Vorteilhafter Weise ist zwischen den mindestens zwei Bearbeitungseinrichtungen mindestens eine Puffereinrichtung oder ein Zwischenspeicher vorgesehen. Diese mindestens eine Puffereinrichtung dient der Aufnahme von textilem Gurtmaterial außerhalb von jeweiligen Bearbeitungsbereichen. In einer Ausführungsform der Erfindung erfolgt diese Zwischenpufferung zwischen der Bearbeitungseinrichtung für den ersten Endbereich und dem Schneiden in Form mindestens einer hängenden Schlaufe. Eine quasi-simultane Bearbeitung von zwei Endbereichen wird bei erheblicher Verkürzung der Baulänge einer entsprechenden Vorrichtung durch eine Zwischenpufferung erleichtert, da so nun ein erster Endbereich bereits einer ersten Bearbeitungseinrichtung, z.B. durch einen Greifer, zugeführt und dort bearbeitet werden kann, während parallel noch eine Länge des Gurtabschnittes festgelegt, abgemessen oder in sonstiger Art und Weise überprüft wird. Gerade bei der vorstehend gewählten Bearbeitungsfolge, nach der in der ersten Bearbeitungseinrichtung der erste Endbereich unter Einschieben eines Stiftes gefaltet und vernäht wird und in der zweiten Bearbeitungseinrichtung ein Ab- und/oder Einmessen des biegeschlaffen Materials mit nachfolgendem Heißtrennen und/oder Nachbearbeiten der Schnittkanten erfolgt, kann aufgrund der vergleichsweise aufwändigen und zeitintensiven Bearbeitung in der ersten Bearbeitungseinrichtung eine Bearbeitung in der zweiten Bearbeitungseinrichtung und eine Übergabe zur nachfolgenden Bearbeitungsschiene im Wesentlichen zeitgleich abgeschlossen werden.

In einer Ausführungsform der Erfindung wird ein Endbereich des biegeschlaffen Materials unter Verwendung eines Pushers in eine Bearbeitungsschiene und/oder Elemente des Sicherheitsgurtes, wie z.B. einen Aufroller etc., eingefädelt. Hierzu ist mindestens ein Schieber oder eine Pin-Platte zum Positionieren und Schieben der Endbereiche vorgesehen. Der Schieber oder die Pin- bzw. Nadel-Platte wirken insbesondere mit einer Einführhilfe zusammen, beispielsweise in Form von Leitblechen. Damit kann gleich zu Beginn der eigentlichen Bearbeitung der erste Endbereich aus einem Längenpuffer durch einen Greifer heraus definiert und zuverlässig über eine Pin-Platte und eine Einführhilfe in die erste Bearbeitungsstation eingeführt werden, ohne dass es sich aufwellt oder in sonstiger Weise undefiniert verhält. Während dessen wird weiter Gurtmaterial in den Längenpuffer gefördert und das biegeschlaffe Material abgemessen.

Nachfolgend wird die Erfindung unter Bezugnahme auf Ausführungsbeispiele anhand von Abbildungen der Zeichnung zur Darstellung weiterer Merkmale und Vorteile näher erläutert. In der Zeichnung zeigen:
- Figuren 1a - 1d:: ein schematisiertes Flussdiagramm zur Veranschaulichung eines erfindungsgemäßen Fertigungsverfahrens über verschiedene Bereiche einer entsprechenden Fertigungsvorrichtung in verschiedenen Zeitabschnitten hinweg;
- Figur 2:: eine Abwandlung des Flussdiagramms von Figur 1;
- Figur 3:: einen skizzierten Zeitplan zur Darstellung der zeitlichen Überlappungen einzelner Vorgänge eines Verfahrens gemäß Flussdiagramm von Figur 1 und
- Figuren 4a - 4e:: schematisierte Flussdiagramme nur teilautomatisierter Verfahren unter Andeutung der jeweils benötigten Arbeitskräfte mit Variationen in Verfahren und Aufbau.

Über die verschiedenen Abbildungen der Zeichnung hinweg werden für gleiche Elemente und Verfahrensschritte stets die gleichen Bezeichnungen und Bezugszeichen verwendet. Ohne Beschränkung der Erfindung wird nachfolgend nur eine Herstellung von Sicherheitsgurten für Kraftfahrzeuge dargestellt, die aufgrund der Sicherheitsanforderungen und der bei hohem Kostendruck gefertigten jährlichen Stückzahlen einen wesentlichen Einsatzbereich der vorliegenden Erfindung darstellt.

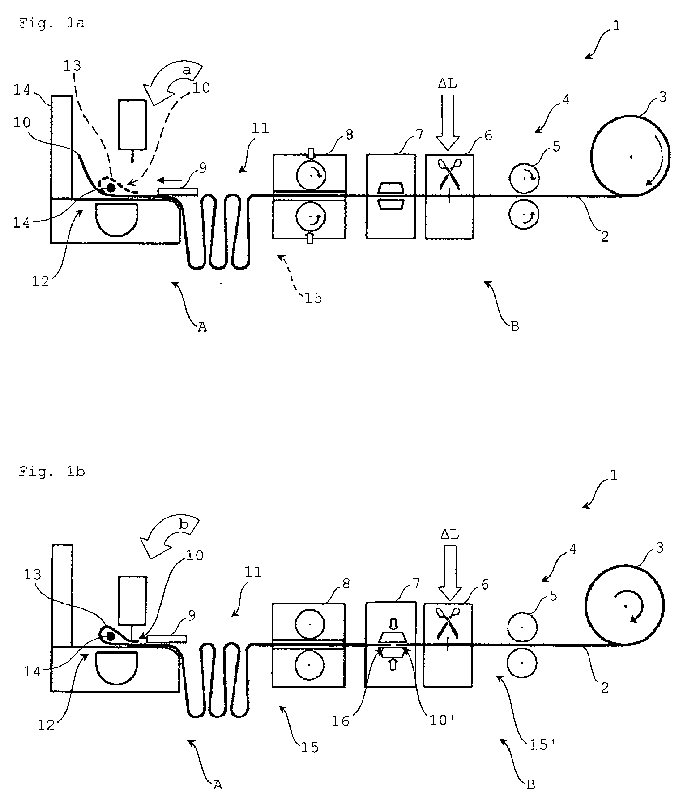

Gemäß der Abbildung von Figur 1a wird in einem ersten Ausführungsbeispiel einer Vorrichtung 1 ein endloses Gurtband 2 als biegeschlaffes Material in Streifenform von einer Speicherrolle 3 zugeführt. Das Gurtband 2 durchläuft einen Puller 5, eine Längenmessung ΔL, einen Heißschneider 6, einen Plätter 7 zur Nachbearbeitung der Schnittkanten des Gurtbandes 2 nach Einsatz des Heißschneiders 6 sowie einen zweiten Puller 8. An den zweiten Puller 8 anschließend wird ein erster Endbereich 10 des Gurtbandes 2 von nicht weiter dargestellten Transportmitteln durch einen Zwischenpuffer 11 hindurch in einen automatischen Stiftschieber 12 als erste Bearbeitungseinrichtung A überführt. Das Einführen des ersten Endbereichs 10 wird durch einen Schieber oder eine Pin-Platte 9 zusammen mit einem Leitblech als Einführhilfe so durchgeführt, dass ein Aufwölben oder Verwinden des biegeschlaffen Materials 2 beim Einführen in die erste Bearbeitungseinrichtung A ausgeschlossen ist. Während nun in dem Stiftschieber 12 der erste Endbereich 10 des Gurtbandes 2 zur Bildung einer Schlaufe 13 mit definierten Abmessungen umgelegt und bei nachfolgendem Einschieben eines Stiftes 14 aus Metall oder Kunststoff mit rundem oder sonstigem Querschnitt vollautomatisch vernäht und überwacht wird, wird von der Speicherrolle 3 fortlaufend Gurtband 2 durch die Puller 5, 8 gefördert. Mit Erreichen einer vorbestimmten Länge L wird dieser Transport von Gurtband 2 gestoppt, der Heißschneider 6 trennt einen Gurtband-Abschnitt 15 der Länge L von dem Gurtband 2 unter Verschmelzung bzw. Versiegelung des textilen Gewebes an den Schnittkanten ab und direkt darauf folgend werden beide neu gebildeten Schnittkanten gemeinsam in dem Plätter 7 positioniert und bearbeitet. Puller 5, Heißschneider 6 und Plätter 7 bilden damit zusammen mit der Längenmessung ΔL die wesentlichen Elemente einer zweiten Bearbeitungseinrichtung B.

Durch Zusammenpressen der noch warmen und damit formbaren Schnittkanten zwischen zwei untemperierten Metallplatten des Plätters 7 werden beide Schnittkanten geformt und dabei insbesondere wieder auf die gleiche Höhe wie das übrige Gurtband 2 gebracht. Damit sind sowohl ein zweiter Endbereich 16 des bereits in Bearbeitung befindlichen Gurtband-Abschnitts 15, als auch ein erster Endbereich 10' eines nachfolgenden Gurtband-Abschnitts 15' definiert gefertigt worden.

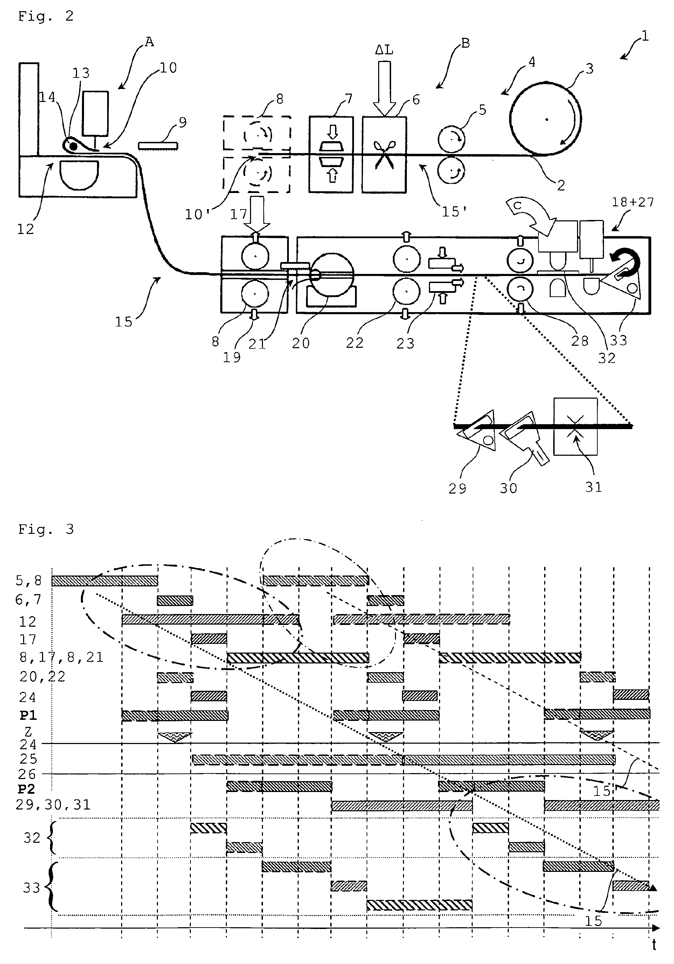

Mit dem Öffnen des Plätters 7 ist der zweite Endbereich 16 des Gurt-Abschnitts 15 gemäß Darstellung von Figur 1b freigegeben und wird nachfolgend in dem auf einem zeichnerisch nicht weiter dargestellten Schwenk- oder Schiebearm 17 angeordneten Puller 8 fixiert in eine zweite Bearbeitungsschiene 18 der Vorrichtung 1 überführt. Die Teilschritte Funktion des Stiftschiebers 12, Transport des Gurtbandes 2 über die Puller 5, 8 mit Abmessen bis zu einer Länge L, Schneiden und Plätten in den Einheiten 6, 7 sind zeitlich überlappend und inklusive der Übergabe durch einen Schwenk- oder Schiebearm 17 und Einfädeln in einen Gurtroller 20 im Wesentlichen simultan ausgeführt worden. Daraus ergibt sich gegenüber einer rein sequenziellen Verarbeitungsweise eine Zeitersparnis, die aus Figur 3 ersichtlich ist.

Wenn der Schwenk- oder Schiebearm 17 mit dem Puller 8 wieder in seine in Figur 1a dargestellte Ausgangslage zurückgekehrt ist, kann über die Puller-Rollen 5 von der Speicherrolle 3 bereits Gurtband 2 mit einem neu gebildeten ersten Endbereich 10' eines noch zu schneidenden Folgeabschnittes 15' in die erste Bearbeitungsschiene 4 einfügt und in dieser weitergefördert werden. Der aktuell in der Bearbeitung befindliche Gurtband-Abschnitt 15 muss dazu mit seinem ersten Endbereich 10 den Stiftschieber 12 noch nicht verlassen haben. Damit laufen auch diese Vorgänge zeitsparend im Wesentlichen simultan zueinander ab.

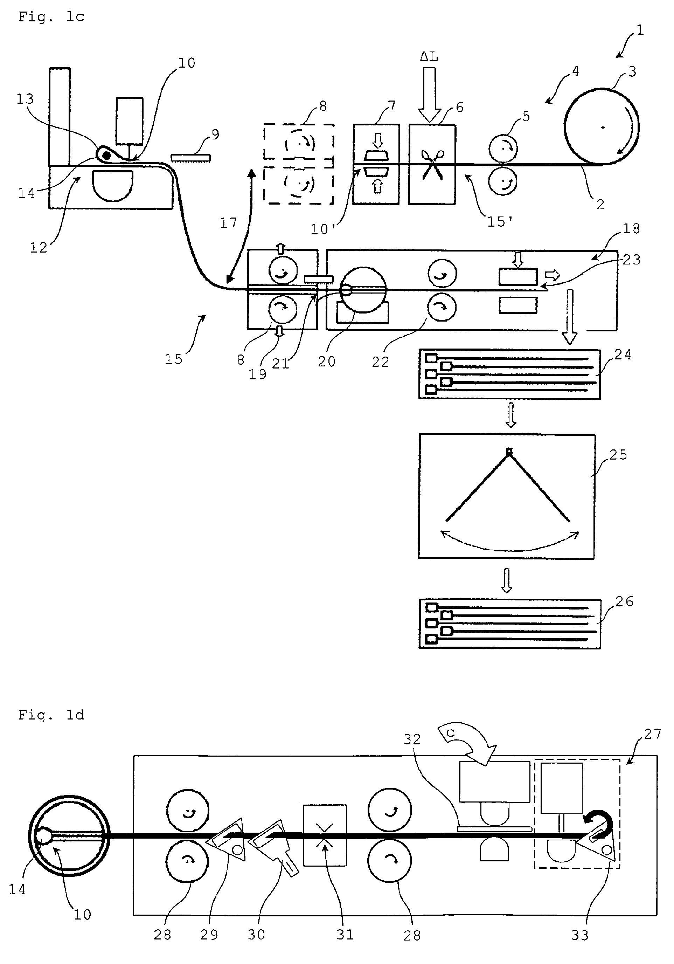

Über in der Abbildung von Figur 1c nur angedeutete Führungsbleche wird der zweite Endbereich 16 des Abschnitts 15 über einen Schieber oder eine Pin-Platte mit Einführhilfe 21 durch einen in der Bearbeitungsschiene 18 definiert vorbereiteten und positionierten Gurtroller 20 hindurch eingefädelt, geführt und an einen weiteren Puller 22 übergeben. Nun wird der hier im reversen Betrieb als Pusher verwendete Puller 8 in der angedeuteten Weise geöffnet, um den Gurtabschnitt 15 freizugeben.

Der Puller 22 fördert den Gurt-Abschnitt 15 so lange, bis der in dem vorstehend beschriebenen Verfahrensschritt mit einem Stift 14 bestückte erste Endbereich 10 durch den entlang der Pfeile 19 geöffneten Puller 8 hindurch den Gurtroller 20 erreicht. Dann wird der Gurt-Abschnitt 15 durch Klemmbacken einer Spanneinrichtung 23 fixiert und mit Zug beaufschlagt, so dass der erste Endbereich 10 in dem Gurtroller 20 in bekannter Weise dauerhaft durch Klemmung fixiert ist und durch die Kraftaufbringung geprüft wird ob ein Stift bzw. Pin 14 vorhanden ist.

Mit Freigabe des Gurtrollers 20 bzw. Retractors wird das Gurtmaterial, kontrolliert durch den rückwärts laufenden Puller 22, langsam aufgewickelt, bis nach dem Lösen einer mechanischen Rastierung ca. 1,5 m Gurtmaterial automatisch von dem Gurtroller 20 aufgewickelt worden sind. Der so vorbereitete Gurt-Abschnitt 15 wird nun zusammen mit dem Gurtroller 20 in einen Zwischenpuffer 24 überführt, aus dem diese halbfertigen Einheiten heraus einem sog. Pendeltest 25 zur Überprüfung der Funktionsfähigkeit des Gurtrollers 20 zugeführt werden. Alle Einheiten, die den Pendeltest bestanden haben, werden in einen weiteren Zwischenpuffer 26 überführt.

Dieser Test 25 kann je nach Anforderung auch an das Ende einer Fertigung verlegt und in einen Endtest integriert werden. Hierdurch könnte das gesamte Verfahren noch beschleunigt werden, da insbesondere auf einen der beiden Zwischenpuffer 24, 26 verzichtet werden könnte, wie nachfolgend anhand des Ausführungsbeispiels von Figur 2 noch beschrieben wird.

Im vorliegenden Ausführungsbeispiel wird nun eine halbfertige Einheit gemäß Figur 1d dem Zwischenpuffer 26 entnommen. Dabei ist der Gurtabschnitt 15 auf dem Gurtroller 20 bis auf eine bestimmte Länge l₁ von ca. 1,5 m automatisch aufgerollt fixiert und wird so einer letzten Bearbeitungsschiene 27 übergeben. In der Bearbeitungsschiene 27 liegt der Gurtabschnitt 15 also bereits auf eine vorgegebene Länge l₁ fixiert abgerollt vor. Dabei wird nun der zweite Endbereich 16 durch einen Puller 28, eine Umlenkeinrichtung 29 und ein Steckblech 30 hindurch geführt, so dass diese Elemente quasi auf dem Gurtabschnitt 15 aufgefädelt werden. Um ein Herabrutschen der Umlenkeinrichtung 29 und des Steckblechs 30 in einer Einbaulage zu unterbinden, wird an dem Gurtabschnitt 15 auf einer vorgegebenen Länge l₂ ein Kunststoff-Niet 31 oder ein vergleichbarer Anschlag fixiert. Unter Anordnung eines Etiketts 32 wird der zweite Endbereich 16 durch einen Endbeschlag 33 eingefädelt, um ein vorbestimmtes Maß umgefaltet und vernäht. Dieses Vernähen und die Anordnung des Etiketts 32 wird dabei mit anderen Verarbeitungsschritten entlang der Schiene 27 wiederum zeitlich überlappend ausgeführt, so dass sich auch bei der Bearbeitung des zweiten Endbereiches 16 des Gurtabschnitts 15 quasi-simultan ausgeführte Teilbearbeitungsschritte ergeben. Hierzu wird wiederum auf die Abbildung von Figur 3 verwiesen.

Das schematisierte Flussdiagramm von Figur 2 stellt eine Abwandlung des Flussdiagramms der Abbildungen der Figuren 1c und 1d dar. Hierin ist das vorstehend zu Figur 1d beschriebene Auffädeln der Elemente Steckblech 30 und eine Umlenkeinrichtung 29 über den zweiten Endbereich 16 auf dem Gurtabschnitt 15 zusammen mit dem Anbringen des Niets 31 an das Ende der zweiten Bearbeitungsschiene 18 von Figur 1c vorverlagert worden. Es schließt sich nun ohne Zwischenspeicher direkt die Endbearbeitung des zweiten Endbereichs 16 des Gurtabschnitts 15 mit Befestigung des Endbeschlags 33 und Anbringung des Etiketts 32 an der mit c gekennzeichneten Position durch Aufnähen an. Mit den Buchstaben a und b wurden in den Figuren 1a und 1b andere bekannte Positionen für Etiketten 32 an Sicherheitsgurten angedeutet, wobei mit a ein teilweises Unterschieben des Etikett-Materials in die Umfaltung des Gurtmaterials 2 hinein und mit b ein reines Aufnähen des Etiketts 32 bezeichnet wird.

Nun folgt der Pendeltest 25 zur Überprüfung der Funktionsfähigkeit des Gurtrollers 20 sowie die Überführung der fertiggestellten und geprüften Einheit in den Zwischenpuffer 26. Diese Schritte liegen zeitlich vor einer fakultativen optischen Endkontrolle und einer Verpackung.

Figur 3 stellt einen skizzierten Zeitplan zur Veranschaulichung zeitlicher Überlappungen einzelner Vorgänge eines Verfahrens gemäß Flussdiagramm der Abbildungsfolge der Figuren 1a bis 1d dar. Einige der zeitlichen Überlappungen mit im Wesentlichen simultan ablaufenden Bearbeitungs- bzw. Verfahrensschritten sind in einer Auswahl wesentlicher Bereiche durch Strich-punktierte Ovale angedeutet. Die einzelnen Teilschritte sind durch die jeweiligen Bezugszeichen Abschnitten der Fertigungsvorrichtung 1 und bestimmten Elementen einer fertigen Gurt-Einheit zugeordnet. So ist das vorstehend zu den Abbildungen von Figur 1a bis 1d beschriebene Verfahren zeitlich nochmals im Überblick unter Beachtung quasi-simultan ablaufender Vorgänge nachvollziehbar. So folgt auf ein Greifen des Gurtmaterials 2 und Einschieben bzw. Transportieren über die Puller 5, 8 bei automatischem Vermessen über die Einrichtung ΔL eine Übergabe des ersten Endbereichs 10 an die erste Bearbeitungseinrichtung A. Überlappend mit dem Umfalten, Nähen bzw. Riegeln im Stiftschieber 12 wird weiter durch die Puller 5, 8 Gurtband 2 gefördert, bis Heißschneider 6 und Plätter 7 in Aktion treten, um den Gurtabschnitt 15 definiert zu bilden und dabei die Endbereiche 16, 10' zu formen. Mit dem neu gebildeten und nach Öffnen des Plätters 7 freien, aber im Puller 8 fixierten zweiten Endbereich 16 fährt nun der Schwenk- oder Schiebearm 17 von der ersten Bearbeitungsschiene 4 zur zweiten Bearbeitungsschiene 18, während das Nähen bzw. Riegeln sowie Stiftsetzen im Stiftschieber 12 noch andauert. Bei diesem Vorgang wird dabei besonders darauf geachtet, dass beim Vernähen keine sog. Schein-Naht erzeugt wird, also eine nur aus starkem Oberfaden bestehende Verbindung ohne dauerhafte Sicherung im Gewebe durch einen Unterfaden.

Parallel zum Nähen im Stiftschieber 12 wird ein in bekannter Weise vorbereiteter Gurtroller 20 manuell oder per Roboter eingelegt. So kann bereits der Puller 8 nun im reversen Betrieb als Pusher zusammen mit dem Schieber oder der Pin-Platte und Einführhilfe 21 den zweiten Endbereich 16 durch den Gurtroller 20 hindurch zum Puller 22 fördern.

Gemäß Figur 1c wird nach dem Arretieren des aus der ersten Bearbeitungseinrichtung A herausgezogenen ersten Endbereichs 10 im Gurtroller 20 der Zwischenpuffer 24 manuell beschickt, Personenzugriff P1. Hiermit ist ein erster Zyklus Z beendet. Es schließt sich der Pendeltest 25 und das Einlegen in den Zwischenpuffer 26 an, aus dem parallel jedoch eine bereits abgelegte halbfertige Gurtanordnung entnommen werden kann, Personenzugriff P2. In diese beiden Personenzugriffe P1, P2 ist in gestrichelter Umrandung jeweils eine ausreichende Wegezeit als Sicherheit mit eingerechnet worden.

In der dritten Bearbeitungsschiene 27 werden nun nach Figur 1d durch die Puller 28 die Stationen Umlenkeinrichtung 29, Steckblech 30 und Anbringen von Niet 31 durchlaufen. Wieder überlagern sich hierbei Transport von Gurtmaterial des Abschnitts 15 mit einzelnen Bestückungs- und Bearbeitungsschritten. Das Anbringen des Etiketts 32 und Riegeln des Endbeschlages 33 beenden die Bearbeitung in der Vorrichtung 1, ein fertiger Sicherheitsgurt bei Öffnung u.a. der Puller 22, 28 wird entnommen und einer jeweiligen Bestimmungen genügenden Endprüfung sowie Verpackung zugeführt. Dabei wird durch das vorstehend geschilderte Verfahren eine gesicherte und gleichbleibende Qualität bei verkürzter Arbeitstaktzeit bei geringem Personaleinsatz erreicht.

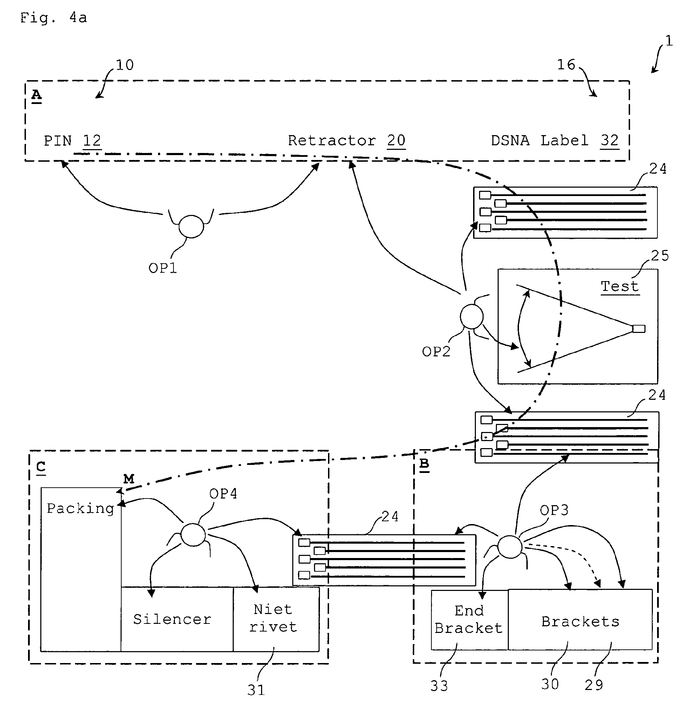

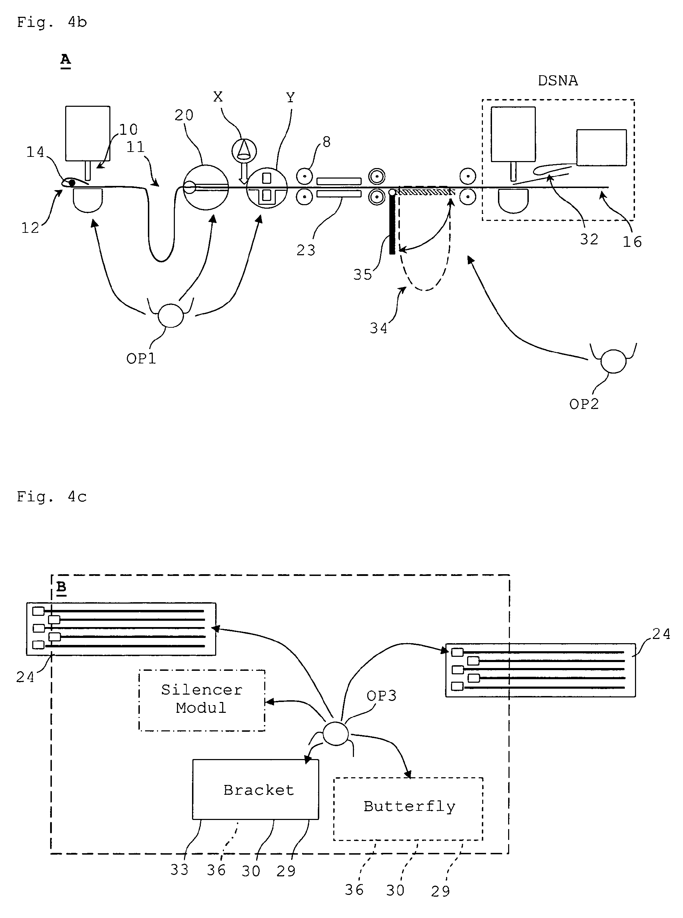

Ausgehend von einer skizzierten Gesamtdarstellung einer Vorrichtung 1 in Figur 4a zeigt die Folge der Figuren 4b bis 4e schematisierte Flussdiagramme eines in Abwandlung zu der vorstehenden Beschreibung nur teilautomatisierten Verfahrens mit einem sich über verschiedene Bearbeitungseinrichtungen A, B, C bzw. getrennte Arbeitsplätze erstreckenden Materialfluss M. Bearbeitungseinrichtungen A, B und C sind jeweils unter Andeutung der jeweils benötigten Arbeitskräfte bzw. Operatoren Op1 bis Op4 mit einer Variation im Aufbau bzw. Funktionsumfang eines Moduls angedeutet dargestellt. Unter Wahrung der beanspruchten Grundidee ist eine Vorrichtung nach der Übersichtsdarstellung von Figur 4a in die einzelnen Bearbeitungseinrichtungen A bis C in unterschiedlicher Detaillierung und mit einer Abwandlung aufgeteilt worden.

Bearbeitungseinrichtung A ist entsprechend der Darstellung der Figuren 1a bis 1c nach schematischer Darstellung in Figur 4a in Figur 4b konkretisiert. Als wesentlicher Unterschied dieser neuen Ausführungsform ist aufzuzeigen, dass nunmehr nur ein geringer Teil des biegeschlaffen Gurtmaterials 2 durch den Gurtroller 20 hindurch gezogen werden muss, um einen ersten freien Endbereich 10 unter ausreichender Reserve dem Stiftschieber bzw. Pin-loader 12 zuzuführen. Parallel hierzu wird an einem zweiten Endbereich 16 bereits ein Etikett 32 in einer DSNA-Einheit, die eine kombinierte Druck-/Schneid-/Näh- und Auswurfvorrichtung darstellt, fertig aufgebracht. Damit sind auch im Fall eines vorgelängten bzw. auf ein jeweiliges Maß abgeschnitten und an Schnittkanten vorbehandelten Gurtband-Abschnitts 15 wieder zeitlich überlappende Arbeitsvorgänge realisiert worden, die an den Endbereichen 10, 16 durchgeführt werden. Dabei wird bereits beim Einlegen des Gurtband-Abschnitts 15 manuell durch den Operator Op1 mit einem korrekt vorbereiteten und positionierten Gurtroller bzw. Retractor 20 versehen.

Nach Beendigung der Näharbeiten an der Schlaufe bzw. Stifttasche 13 im Bereich des Stiftschiebers 12 an dem einen Endbereich 10 sowie des Etiketts 32 an dem anderen Endbereich 16 wird der halbfertige Sicherheitsgurt durch Operator Op2 aus der Bearbeitungseinrichtung A entnommen und einem Pendeltest 25 unterzogen, um schließlich einem Zwischenspeicher 25 zugeführt zu werden. Operator Op3 entnimmt den halbfertigen Sicherheitsgurt von dort, um ihn in der Bearbeitungseinrichtung B mit einer Umlenkeinrichtung 29, Steckblech 30 sowie ggf. einem je nach Applikation alternativ einsetzbaren Clip 36 zu versehen. Schließlich wird an dieser Stelle auch ein Endbeschlag 33 zur Fixierung des Sicherheitsgurtes im Bereich einer B-Säule eines Kraftfahrzeugs angebracht. Dabei sind die entsprechenden Einzelteile von Operator Op3 vor Einlegen des halbfertigen Sicherheitsgurts in Montagehilfen ungefähr in Form von Taschen angeordnet worden, sog. Jigs. Optional können in der Bearbeitungseinrichtung B auch eine oder mehrere Nieteinrichtungen vorgesehen sein, wobei ein Niet aus Kunststoff oder Metall ein Verschieben insbesondere des Steckblechs 30 über dem Gurtmaterial limitiert.

Auch zwischen den Bearbeitungseinrichtungen B und C bildet ein nachfolgend generell mit 24 bezeichneter Puffer bzw. Zwischenspeicher eine Übergabestelle, die nun von Operator Op3 beschickt und von Operator Op4 geleert wird. Dabei führt Operator Op4 in Bearbeitungseinrichtung C im vorliegenden Ausführungsbeispiel mit dem Anbringen eines sog. Silencers, der ein Klappern des Steckblechs 30 nach dem Öffnen des Sicherheitsgurts verhindert, eine Abschlussarbeit aus. Nachfolgend wird der Sicherheitsgurt in definierter Art und Weise aufgerollt und durch Operator Op4 verpackt.

Figur 4b konkretisiert nun den Aufbau der Bearbeitungseinrichtung A. Hier wird deutlich, dass nun zwei Längenpuffer oder Längenausgleiche in Form von Schlaufenlagern bzw. Zwischenpuffern 11, 34 den jeweiligen Nähstationen beim Stiftschieber bzw. Pin-feeder 12 und dem Spender von Etiketten 32 vorgelagert angeordnet sind. Die Arbeitsvorgänge im Stiftschieber bzw. Pin-feeder 12 laufen in der Regel länger, als die im Bereich des Spenders der Etiketten 32. Der Spender der Etiketten 32 wird direkt nach dem Einschieben des Gurtes 2 gestartet. Darüber hinaus wird überschüssige Gurt-Länge 34 durch den vor einer Klappe 35 angebrachten Puller in die geöffnete Klappe 35 gefördert. Nachdem der erste Endbereich 10 des Gurtes mit einem Stift bzw. Pin 14 versehen wurde, wird durch den Puller 8 und die Spanneinrichtung 23 der Pin 14 in den Gurtroller 20 eingezogen. Der mit dem Etikett 32 versehene zweite Endbereich 16 wird dann durch Umkehrung der Förderichtung des Pullers 8 kontrolliert auf dem Gurtroller 20 aufgewickelt. Danach wird diese halbfertige Einheit durch Operator Op 2 entnommen. Durch diese Anordnung können auch die Zwischenpuffer 11, 34 mindestens teilweise entleert werden, während die Arbeiten im Bereich des Stiftschiebers bzw. Pin-feeders 12 noch laufen.

Nur als Beispiel sind dem Puller 8 in dieser Ausführungsform vorgelagert ein Markenleser X und ein Jig Y zur Aufnahme genau eines bestimmten Gurtbauteiles als Mittel zur konsequenten Umsetzung des Joka Yoke-Ansatzes eingezeichnet worden. Durch den Markenleser X wird die korrekte Orientierung des manuell eingelegten Abschnitts des biegeschlaffen Materials überprüft. Die Montagehilfe bzw. das Jig Y ist als Aufnahmetasche für ein Gurtbauteil, wie z.B. eine Umlenkeinrichtung 29 baulich so ausgebildet, dass kein anderes Teil und zudem ein an dieser Position vorgesehenes Teil auch nur in einer korrekten Ausrichtung mechanisch hineinpasst. Die Anwesenheit eines jeweils vorgesehenen Gurtbauteiles wird elektronisch im Jig Y überprüft, wobei das Jig Y selber ebenfalls über in diesem Ausführungsbeispiel zwölf Kontakte mit seiner Position innerhalb der Fertigungsvorrichtung sowohl über Hardware als auch über Software codiert ist, so dass es auf Anwesenheit und nach seiner Art sowie Position innerhalb einer Fertigungsstraße vollautomatisch zum Zuge einer zentralen elektronischen Abfrage überprüft werden kann. Nur bei positiven Rückmeldungen wird dann ein nächster Fertigungsschritt freigegeben, z.B. ein Start mindestens eines Vernähvorganges. Ein Fehler, z.B. eine fehlerhafte Bestückung eines Jigs Y mit einem Gurtbauteil, kann so einem zuständigen Operator Op auch konkret angezeigt und entsprechend schnell behoben werden.

Bearbeitungseinrichtung B ist zur Andeutung der Fertigungsflexibilität und schnellen Anpassung an Produktänderungen sowie andere Applikationen in zwei Ausführungsformen dargestellt: In der Abbildung der Figur 4c wird prinzipiell eine Verarbeitung eines zweiten Endbereichs 16 mit längsvernähter Einfaltung, einem sog. Butterfly zur Minderung der Gurtbreite nahe eines Endbeschlages 33 gezeigt. Ein sog. Silencer-Modul kann als Option in der Bearbeitungseinrichtung B ebenfalls durch Operator Op3, oder aber jenseits des Zwischenspeichers 24 in Bearbeitungseinrichtung C durch Operator Op4 eingearbeitet werden.

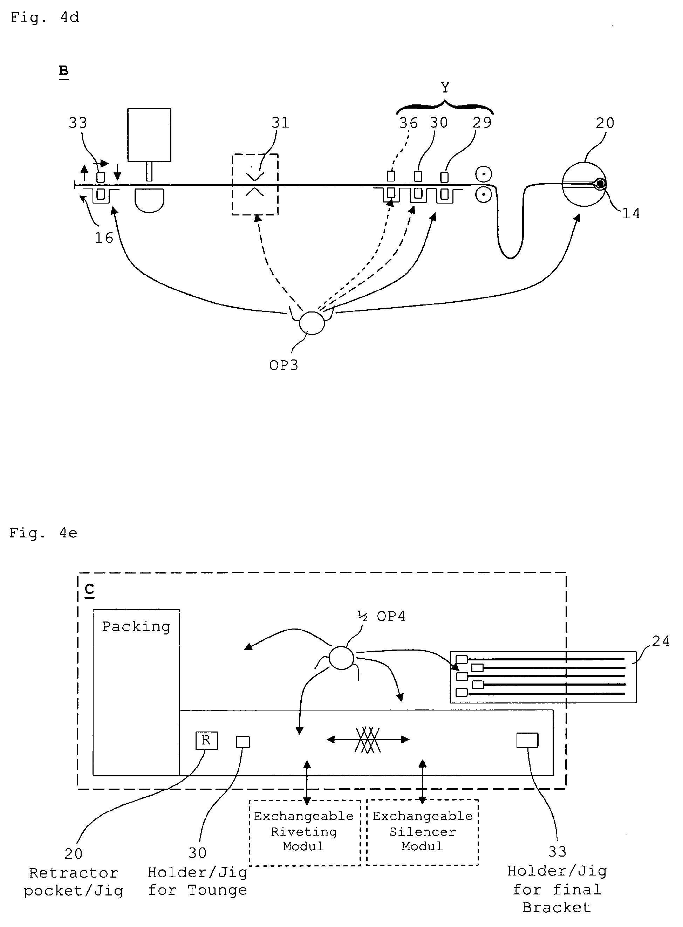

Figur 4d zeigt im Detail Teilschritte zum Auffädeln verschiedener Schlosselemente bzw. brackets unter Andeutung einer optionalen Nietung, wie sie zwischen den Pufferlagern 24 an einer Arbeitsstraße bei nur teilweise abgerolltem Gurtroller 20 vorgesehen sind. In diesem Ausführungsbeispiel werden maximal drei Jigs Y für je ein Gurtbauteil je Applikation verschieblich über einer Gurtlänge 1 angeordnet sowie elektronisch codiert.

Ferner wird hier das Einfädeln eines Endbeschlages 33 händisch durch Operator Op3 durchgeführt. Ein Umfalten eines freien zweiten Endbereiches 16 erfolgt dann unter automatischer Längenmessung mit anschließendem Vernähen jedoch wieder ohne Eingriff eines Operators Op. Damit sind die Jigs Y sowie die Montage und Befestigung eines Endbeschlages 33 mechanisch sowie elektronisch vollständig überprüfbar, um eine Fertigung bei hoher Anpassungs- und Änderungsfreiheit in erweitertem Maße auch hinsichtlich vorhersehbarer Fehler eindeutig protokollierbar zu gestalten.

Die Bearbeitungseinrichtung C stellt nach Figur 4e abschließende Bearbeitungsschritte dar, ebenfalls unter Einblendung von Optionen in Form beispielhaft dargestellter Niet- und Silencer-Module. Diese Module sind über eine Arbeitslänge innerhalb der Bearbeitungseinrichtung C in der angedeuteten Art und Weise längen- bzw. lageverschieblich zwischen Jigs Y zur Aufnahme des Steckbleches 30 einerseits und des Endbeschlags 33 andererseits angeordnet. Hier spielen die Aufnahmen bzw. Jigs die Rolle von Haltern zur Fixierung einer relativen Position, da diese Elemente bereits an dem Sicherheitsgurt soweit montiert sind.

### Bezugszeichenliste

- 1: Vorrichtung
- 2: Gurtband / biegeschlaffes Material in Streifenform
- 3: Speicherrolle
- 4: erste Bearbeitungsschiene
- 5: Puller
- 6: Heißschneider
- 7: Plätter
- 8: Puller
- 9: Schieber oder Pin-Platte
- 10: erster Endbereich
- 10': erster Endbereich eines Folgeabschnittes 15'
- 11: Zwischenpuffer
- 12: Stiftschieber / Pin-loader / Pin-feeder
- 13: Schlaufe
- 14: Metall- oder Kunststoffstifte
- 15: Gurtband-Abschnitt
- 15': Folgeabschnitt
- 16: zweiter Endbereich
- 17: Schwenk- oder Schiebearm
- 18: zweite Bearbeitungsschiene
- 19: Pfeil einer Öffnungsbewegung
- 20: Gurtroller
- 21: Schieber oder Pin-Platte mit Einführhilfe
- 22: Puller
- 23: Spanneinrichtung
- 24: Puffer bzw. Zwischenspeicher/Zwischenpuffer
- 25: Pendeltest
- 26: Puffer bzw. Zwischenpuffer
- 27: dritte Bearbeitungsschiene
- 28: Puller
- 29: Umlenkeinrichtung
- 30: Steckblech
- 31: Niet
- 32: Etikett
- 33: Endbeschlag
- 34: überschüssige Gurtlänge /Längen-Zwischenpuffer
- 35: Klappe/Schleuse
- 36: Clip (bewegliche Anschlag-Klammer zur manuellen Justage der Höhe der Stechzunge in Ruhezustand)

- A: erste Bearbeitungseinrichtung
- B: zweite Bearbeitungseinrichtung
- C: dritte Bearbeitungseinrichtung
- ΔL: Längenmessung
- a, b, c: Positionen mit unterschiedlich aufgenähten Etiketts
- P1, P2: Personaleinsatz mit Wegstrecken zwei Positionen
- Z: Zykluszeit
- Op: Operator / Arbeitskraft
- DSNA: kombinierte Druck-/Schneid-/Näh- und Auswurfvorrichtung
- Y: Jig-Codierung + Überprüfung in Hard- und/oder Software
- X: Markenleser am Gurt + elektrische Poka-Yoke-Jig-Prüfeinrichtung

## Patentansprüche

1. Verfahren zum Verarbeiten von biegeschlaffem textilem Gurtmaterial in Streifenform mit einem ersten und einem zweiten Endbereich,
wobei die beiden Endbereiche (10, 16) des biegeschlaffen Materials (2) im Wesentlichen simultan und in unterschiedlicher Art und Weise bearbeitet werden, wobei zu einer der Bearbeitungsarten mindestens ein Nähvorgang gehört,
**dadurch gekennzeichnet, dass**
in einer ersten Bearbeitungseinrichtung der erste Endbereich (10) unter Einschieben eines Stiftes (14) gefaltet und vernäht wird und im Wesentlichen simultan zu den Verarbeitungsschritten in der ersten Bearbeitungseinrichtung in einer zweiten Bearbeitungsrichtung ein Ab- und/oder Einmessen des biegeschlaffen Materials (2) in Streifenform auf definierte Länge mit nachfolgendem Heißtrennen und Nachbearbeiten der Schnittkanten vorgenommen wird.

2. Verfahren nach dem vorhergehenden Anspruch, **dadurch gekennzeichnet, dass** die beiden Endbereiche (10, 16) des biegeschlaffen Materials (2) manuell durch einen Operator (Op1, Op2, Op3, Op4) in die zugehörigen Module (A, B, C) eingeführt und/oder in diesen positioniert werden.

3. Verfahren nach einem der vorhergehenden Ansprüche,
**dadurch gekennzeichnet, dass** das Nachbearbeiten der Schnittkanten in Form von Plätten oder Warmverformen vorgenommen wird.

4. Verfahren nach einem der vorhergehenden Ansprüche,
**dadurch gekennzeichnet, dass** ein Herausziehen des vorverarbeiteten biegeschlaffen Materials (2) aus der ersten Bearbeitungseinrichtung im Zuge eines Einfädelns des zweiten Endbereichs (16) des biegeschlaffen Materials in und ein Durchführen durch einen Aufrollmechanismus (20) vorgenommen wird.

5. Verfahren nach einem der vorhergehenden Ansprüche,
**dadurch gekennzeichnet, dass** an das Durchführen des zweiten Endbereichs (16) durch Aufrollmechanismus (20) ein Auffädeln von Steckblech (30) und Fixierungsmitteln oder einer Umlenkeinrichtung (29) bei nachfolgender Anordnung eines Sicherungsniets (31) oder eines vergleichbaren Anschlags z.B. durch Aufnähen an vorbestimmter Stelle bzw. Gurtlänge durchgeführt wird.

6. Verfahren nach einem der vorhergehenden Ansprüche,
**dadurch gekennzeichnet, dass** das biegeschlaffe Material (2) mindestens außerhalb eines zur Bearbeitung anstehenden Bereiches platzoptimiert zwischengepuffert wird, insbesondere in Form mindestens einer hängenden Schlaufe.

7. Verfahren nach einem der vorhergehenden Ansprüche,
**dadurch gekennzeichnet, dass** nach einem Heißtrennen des biegeschlaffen Materials (2) die neu gebildeten Endbereiche (16, 10') in einem gemeinsamen Schritt zeitgleich geformt werden, insbesondere in einem Plätter (7).

8. Verfahren nach einem der vorhergehenden Ansprüche,
**dadurch gekennzeichnet, dass** der Endbereich (10, 16) unter Verwendung eines Schiebers oder einer Pin-Platte (9) insbesondere zusammen mit einer Einführhilfe positioniert und geschoben werden.

9. Verfahren nach einem der vorhergehenden Ansprüche,
**dadurch gekennzeichnet, dass** ein Puller (8) in einer zweiten Bearbeitungsschiene (18) als Pusher reversibel betrieben wird.

10. Vorrichtung zum Verarbeiten von biegeschlaffem textilem Gurtmaterial in Streifenform,
wobei mindestens zwei Bearbeitungseinrichtungen (A, B) zum im Wesentlichen simultanen Bearbeiten des ersten Endbereichs (10) und des zweiten Endbereichs (16) vorgesehen sind,
wobei die Bearbeitungseinrichtungen (A, B) zu voneinander verschiedener Art der Bearbeitung ausgebildet sind, **dadurch gekennzeichnet, dass**
die erste Bearbeitungseinrichtung ausgebildet ist, den ersten Endbereich (10) unter Einschieben eines Stiftes (14) zu falten und zu vernähen und
die zweite Bearbeitungsrichtung ausgebildet ist, ein Ab- und/oder Einmessen des biegeschlaffen Materials (2) in Streifenform auf definierte Länge mit nachfolgendem Heißtrennen und Nachbearbeiten der Schnittkanten vorzunehmen.

11. Vorrichtung nach dem vorhergehenden Anspruch, **dadurch gekennzeichnet, dass** zwischen den mindestens zwei Bearbeitungseinrichtungen (A, B) mindestens eine Puffereinrichtung (24, 26, 34) zur Aufnahme von textilem Gurtmaterial (2) außerhalb von Bearbeitungsbereichen vorgesehen ist.

12. Vorrichtung nach einem der beiden vorhergehenden Ansprüche, **dadurch gekennzeichnet, dass** mindestens ein Schieber oder eine Pin-Platte (9) zum Positionieren und Schieben der Endbereiche (10, 16) vorgesehen ist, der insbesondere mit einer Einführhilfe zusammenwirkt.

13. Vorrichtung nach einem der drei vorhergehenden Ansprüche, **dadurch gekennzeichnet, dass** ein reversibel betreibbarer Puller (8) auf einem Schwenk- oder Schiebearm (17) zur Überführung eines Endbereiches (16) des Abschnitts (15) von einer Bearbeitungsschiene (4) in eine weitere Bearbeitungsschiene (18) angeordnet ist.

14. Vorrichtung nach einem der vier vorhergehenden Ansprüche, **dadurch gekennzeichnet, dass** mindestens eine Montagehilfe (x) ungefähr in Form von Taschen zur Aufnahme genau eines bestimmten Schlosselementes vorgesehen ist, die mechanisch und elektronisch codiert ist.

## Claims

1. A method for processing flexible textile belt material in strip form, with a first and second end region,
in which the two end regions (10, 16) of the flexible material (2) are processed at essentially the same time and in different ways, one of the processing types being at least one sewing operation,
**characterized in that**
in a first processing device, the first end region (10) is folded and sewn after a pin (14) has been inserted and in a second processing device, essentially at the same time as the processing steps in the first processing device, a measurement and/or calibration of the flexible material (2) in strip form to a definite length is carried out, with a subsequent hot cutting and finishing of the cut edges.

2. The method according to the preceding claim, **characterized in that** the two end regions (10, 16) of the flexible material (2) are manually inserted into the associated modules (A, B, C) and/or positioned in them by an operator (Op1, Op2, Op3, Op4).

3. The method according to one of the preceding claims, **characterized in that** the finishing of the cut edges is carried out in the form of ironing or hot deforming.

4. The method according to one of the preceding claims, **characterized in that** the preprocessed flexible material (2) is pulled out of the first processing device in the course of a threading-in of the second end region (16) of the flexible material and a guiding-through is carried out by means of a reeling mechanism (20).

5. The method according to one of the preceding claims, **characterized in that** with the guiding-through of the second end region (16) by means of the reeling mechanism (20), a threading-on of the insertion plate (30) and fixing means or of a deflecting device (29) is carried out, with a subsequent placement of a securing rivet (31) or a comparable stop, e.g. by means of stitching at a predetermined location or belt length.

6. The method according to one of the preceding claims, **characterized in that** the flexible material (2) is temporarily stored in a space-optimized way at least outside a region that is in line for processing, particularly in the form of at least one suspended loop.

7. The method according to one of the preceding claims, **characterized in that** after a hot cutting of the flexible material (2), the newly produced end regions (16, 10') are shaped at the same time in a combined step, particularly in an iron (7).

8. The method according to one of the preceding claims, **characterized in that** the end region (10, 16) is positioned and slid using a slider or a pin plate (9), in particular together with an insertion aid.

9. The method according to one of the preceding claims, **characterized in that** a puller (8) is reversibly operated as a pusher in a second processing rail (18).

10. A device for processing flexible textile belt material in strip form,
in which at least two processing devices (A, B) are provided for processing the first end region (10) and the second end region (16) at essentially the same time,
and in which the processing devices (A, B) are embodied for processing in different ways from each other,
**characterized in that**
the first processing device is embodied to fold and sew the first end region (10) after a pin (14) has been inserted and
the second processing device is embodied to carry out a measurement and/or calibration of the flexible material (2) in strip form to a definite length with a subsequent hot cutting and finishing of the cut edges.

11. The device according to the preceding claim, **characterized in that** between the at least two processing devices (A, B), at least one buffering device (24, 26, 34) is provided for receiving textile belt material (2) outside the processing regions.

12. The device according to the two preceding claims, **characterized in that** at least one slider or one pin plate (9) is provided for positioning and sliding the end regions (10, 16), which in particular cooperates with an insertion aid.

13. The device according to one of the preceding three claims, **characterized in that** a reversibly operable puller (8) is positioned on a pivoting or sliding arm (17) for transferring an end region (16) of the section (15) from one processing rail (4) to another processing rail (18).

14. The device according to one of the preceding four claims, **characterized in that** at least one assembly aid (x) approximately in the form of pockets for receiving exactly one particular lock element is provided, which is mechanically and electronically encoded.

## Revendications

1. Procédé de traitement d'un matériau de type sangle textile flexible en forme de bande, comportant une première et une seconde zones d'extrémité,
les deux zones d'extrémité (10, 16) du matériau flexible (2) étant traitées sensiblement simultanément et selon différents modes, l'un des modes de traitement comprenant au moins une opération de couture,
**caractérisé en ce que**
dans un premier moyen de traitement, on replie et on coud la première zone d'extrémité (10) en introduisant une tige (14), et sensiblement simultanément aux étapes de traitement dans le premier moyen de traitement, on effectue un mesurage et/ou calibrage du matériau flexible (2) en forme de bande à une longueur définie, suivi(s) d'une séparation à chaud et d'une reprise des arêtes de coupe.

2. Procédé selon la revendication précédente, **caractérisé en ce que** les deux zones d'extrémité (10, 16) du matériau flexible (2) sont introduites et/ou positionnées dans les modules associés (A, B, C) manuellement par un opérateur (Op1, Op2, Op3, Op4).

3. Procédé selon l'une des revendications précédentes, **caractérisé en ce que** la reprise des arêtes de coupe est réalisée sous forme de repassage ou de déformation à chaud.

4. Procédé selon l'une des revendications précédentes, **caractérisé en ce qu'**une extraction du matériau flexible (2) prétraité hors du premier moyen de traitement s'effectue au cours d'un enfilement de la seconde zone d'extrémité (16) du matériau flexible dans un mécanisme d'enroulement (20) et au cours d'un passage à travers celui-ci.

5. Procédé selon l'une des revendications précédentes, **caractérisé en ce que** suite au passage de la seconde zone d'extrémité (16) à travers le mécanisme d'enroulement (20), on effectue un enfilement d'une tôle enfichable (30) et de moyens de fixation ou d'un système de renvoi (29), suivi d'un agencement d'un rivet de blocage (31) ou d'une butée comparable, par exemple par couture à un emplacement prédéterminé ou à une longueur de sangle prédéterminée.

6. Procédé selon l'une des revendications précédentes, **caractérisé en ce que** le matériau flexible (2) est stocké temporairement, en étant optimisé vis-à-vis de son encombrement, au moins à l'extérieur d'une zone à traiter, en particulier sous la forme d'au moins une boucle suspendue.

7. Procédé selon l'une des revendications précédentes, **caractérisé en ce qu'**après la séparation à chaud du matériau flexible (2), les zones d'extrémité (16, 10') reformées sont mises en forme simultanément dans une étape commune, en particulier dans un dispositif de repassage (7).

8. Procédé selon l'une des revendications précédentes, **caractérisé en ce que** la zone d'extrémité (10, 16) est positionnée et poussée en utilisant un poussoir ou une plaque à broches (9), en particulier conjointement avec un dispositif d'aide à l'introduction.

9. Procédé selon l'une des revendications précédentes, **caractérisé en ce que** l'on fait fonctionner un organe tracteur (8) de façon réversible en tant qu'organe pousseur dans une seconde voie de traitement (18).

10. Dispositif destiné à traiter un matériau de type sangle textile flexible en forme de bande,
dans lequel sont prévus au moins deux moyens de traitement (A, B) pour le traitement sensiblement simultané de la première zone d'extrémité (10) et de la seconde zone d'extrémité (16),
les moyens de traitement (A, B) étant conçus pour des modes de traitement qui se distinguent l'un de l'autre,
**caractérisé en ce que**
le premier moyen de traitement est conçu pour replier et coudre la première zone d'extrémité (10), une tige (14) étant introduite, et
le second moyen de traitement est conçu pour effectuer un mesurage et/ou calibrage du matériau flexible (2) en forme de bande à une longueur définie, suivi(s) d'une séparation à chaud et d'une reprise des arêtes de coupe.

11. Dispositif selon la revendication précédente, **caractérisé en ce qu'**il est prévu, entre lesdits au moins deux moyens de traitement (A, B) au moins un moyen formant tampon (24, 26, 34) pour recevoir un matériau de type sangle textile (2) à l'extérieur des zones de traitement.

12. Dispositif selon l'une des deux revendications précédentes, **caractérisé en ce qu'**il est prévu au moins un poussoir ou une plaque à broches (9) pour positionner et pousser les zones d'extrémité (10, 16), qui coopère en particulier avec un organe d'aide à l'introduction.

13. Dispositif selon l'une des trois revendications précédentes, **caractérisé en ce qu'**un organe tracteur (8) à fonctionnement réversible est disposé sur un bras de pivotement ou de poussée (17) pour transférer une zone d'extrémité (16) de la partie (15) depuis une voie de traitement (4) jusque dans une autre voie de traitement (18).

14. Dispositif selon l'une des quatre revendications précédentes, **caractérisé en ce qu'**il est prévu au moins un organe d'aide au montage (x) approximativement en forme de poches destinées à recevoir exactement un élément de verrouillage déterminé, codé sur le plan mécanique et électronique.
